(19) Europäisches Patentamt

European Patent Office

Office européen des brevets

(11) EP 1 432 205 A2

(12) EUROPEAN PATENT APPLICATION

(43) Date of publication:
23.06.2004 Bulletin 2004/26

(51) Int Cl.7: H04L 29/06, H04L 12/26, H04L 12/24

(21) Application number: 03028620.7

(22) Date of filing: 15.12.2003

(84) Designated Contracting States:
AT BE BG CH CY CZ DE DK EE ES FI FR GB GR HU IE IT LI LU MC NL PT RO SE SI SK TR
Designated Extension States:
AL LT LV MK

(30) Priority: 16.12.2002 JP 2002363894

(71) Applicant: NTT DoCoMo, Inc.
Tokyo 100-6150 (JP)

(72) Inventors:
• Ishikawa, Taro, Intellectual Property Department
Chiyoda-ku Tokyo 100-6150 (JP)
• Inamura, Hiroshi,
Intellectual Property Department
Chiyoda-ku Tokyo 100-6150 (JP)
• Miyake, Motoharu,
Intellectual Property Department
Chiyoda-ku Tokyo 100-6150 (JP)
• Yokota, Kazuhisa, Int.Prop.Dpt.,
NTT DoCoMo, inc.
Chiyoda-ku, Tokyo 100-6150 (JP)
• Takahashi, Osamu,
Intellectual Property Department
Chiyoda-ku Tokyo 100-6150 (JP)

(74) Representative: Sparing - Röhl - Henseler
Patentanwälte
Rethelstrasse 123
40237 Düsseldorf (DE)

(54) Automatic detecting method for protocol nonconformity and automatic detecting apparatus for protocol nonconformity

(57) An object of the present invention is to provide an automatic detecting apparatus for protocol nonconformity in which protocol nonconformity can be detected without necessity of technical knowledge and complex operation.

A packet transmitted or received between the terminals is acquired via a network interface, and the state information regarding a transmitting and receiving state of the packet to correspond to a result of transmitting and receiving control in accordance with a communication protocol is calculated (connection information calculating portion). Also, a transmitting and receiving control process to be made based on the packet is specified and the normal information to correspond to a processing result that the specified transmitting and receiving control process is normally performed is estimated (normal information calculating portion). The state information and the normal information are compared in accordance with a relation defined by the nonconformity information (nonconformity comparison determining portion) to detect the protocol nonconformity.

FIG. 1

**Description**

The present invention relates to an automatic detecting method for protocol nonconformity and an automatic detecting apparatus for protocol nonconformity, and more particularly to an automatic detecting method for protocol nonconformity and an automatic detecting apparatus for protocol nonconformity that are useful for detecting a nonconformity at the time of introducing a new communication apparatus.

In recent years, since Internet accesses are rapidly increasing, various computers and communication devices mounting a TCP/IP (Transmission Control Protocol/Internet Protocol) protocol have been developed. Also, new applications employing the TCP/IP protocol have been developed to provide more kinds of applications. Since the kinds of computers and communication devices mounting the TCP/IP protocol are increased, more kinds of nonconformity may possibly occur in mounting the TCP/IP protocol. Also, though there was no problem in mounting the TCP/IP protocol for the conventional applications, when it is employed for the new applications, there is the possibility that the potential nonconformity may be induced. That is, the nonconformity in mounting the TCP/IP protocol as herein used may occur when the communication apparatus does not perform the operation in accordance with the specifications of the TCP/IP protocol, or when the expected communication process is not performed in the TCP/IP protocol due to false mounting such as improper use of the application, as well as when the expected communication process does not operate in the new application because of a deficiency or defect in the TCP/IP protocol itself that is not supposed in the conventional usage.

One of the conventional methods for judging the nonconformity in mounting the TCP/IP protocol involves the use of a protocol analyzer represented by, for example, tcpdump (refer to non-patent document 1). FIG. 6 shows a functional block diagram of the protocol analyzer 8. The protocol analyzer 8 has a main function of collecting the packets passing across a network (network interface 8a, packet receiving portion 8b). A protocol header in the packet is translated into recognizable text data (packet translation portion 8d) at every information delimiter, and output on the screen (screen output portion 8e), whereby the protocol nonconformity is judged by understanding the contents of packet.

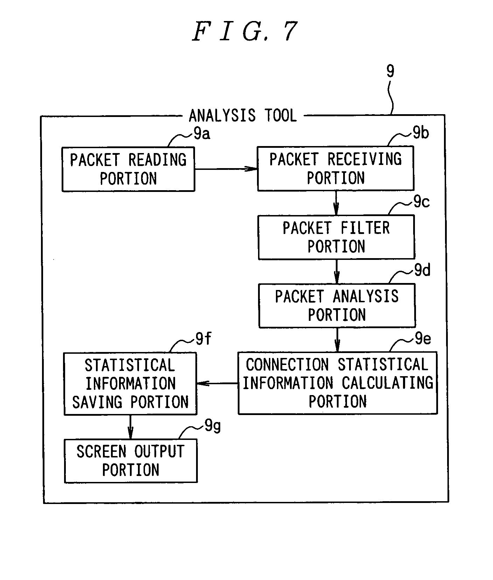

Further, regarding the TCP, an analysis tool represented by tcptrace (refer to non-patent document 2) has been proposed to acquire the statistical information such as transfer data amount, retransmit data amount, throughput, and round trip time from the saved data of packet collected by the standard protocol analyzer such as tcpdump. These statistical information are displayed on the screen and employed as the judgment material for protocol nonconformity. FIG. 7 shows a functional block diagram of the analysis tool 9.

(Non-patent document 1)

RFC2398 Some Testing Tools for TCP Implementors, (online), (retrieved on December 11, 2002), Internet <URL: http://www.tcpdump.org/> (Non-patent document 2)

RFC2398 Some Testing Tools for TCP Implementors, (online), (retrieved on December 11, 2002), Internet <URL: http://www.tcptrace.org/>

However, the translation output acquired from the protocol analyzer or the statistical information obtained by the analysis tool is insufficient to detect the protocol nonconformity.

That is, the protocol analyzer translates only the header of each of the packets that are transmitted or received at multiple connections and collected at the same time. Therefore, at the time of detecting the protocol nonconformity, it is required to make a complex operation of associating each packet with connection as well as with part in a protocol proper sequence from the translation information.

For the analysis tool, the saved data of the protocol analyzer is processed to provide the statistical values such as transmission data amount, retransmit data amount and throughput and the graphs such as sequence diagrams for every connection. However, occurrence of abnormality to some extent may be confirmed, but it is not judged which processing nonconformity has caused the abnormality. Therefore, to specify which processing nonconformity is caused on the basis of the result indicated by the analysis tool, it is required to specify the packet around the time when the nonconformity has possibly occurred, and specify the abnormality of processing by checking whether or not there is abnormality in the packet configuration in accordance with the protocol proper sequence. Moreover, it is necessary to consider that the processing contents in the protocol are changed depending on the communication state, whereby some technical knowledge and complex operation are required to specify the cause.

In the light of the above-mentioned problems, it is an object of the invention to provide an automatic detecting method for protocol nonconformity and an automatic detecting apparatus for protocol nonconformity in which protocol nonconformity can be detected without necessity of technical knowledge and complex operation.

This object is solved by the features of claim 1 and 6, respectively.

Thus, it is provided an automatic detecting method for a protocol nonconformity in a transmitting and receiving control process occurring in the communications between transmitting and receiving terminals that make at least one transmitting and receiving control process in accordance with a predetermined communication protocol, the method comprising a calculation step of calculating the state information regarding a transmitting and receiving state of a packet to correspond to a result of transmitting and receiving control in accordance with the communication protocol by acquiring the packet transmitted or received in the communications between the transmitting and receiving terminals, and a comparison step of comparing the state information calculated at the calculation step and the nonconformity information featuring nonconformity in the at least one transmitting and receiving control process, wherein the transmitting and receiving control process where the nonconformity occurs is detected based on a comparison result at the comparison step.

The method may further comprise an estimation step of specifying the transmitting and receiving control process to be made based on the packet transmitted or received at the transmitting and receiving terminal in accordance with the communication protocol, and estimating the normal information corresponding to a processing result that the specified transmitting and receiving control process is normally performed, wherein the nonconformity information defines a relation between the state information calculated at the calculation step when there is the nonconformity and the normal information.

The nonconformity information may be used to define a relation between the state information and a fixed value confirmed in advance for the nonconformity in the transmitting and receiving control process.

The calculation step may further comprise updating the state information every time acquiring the packet, and the comparison step further comprises comparing the latest state information updated at the calculation step and the nonconformity information.

The state information may include a total number of transmitting and receiving packets, the maximum value or minimum value of packet size, and the round trip time up to receiving a response packet to the transmitted packet.

The automatic detecting apparatus for a protocol nonconformity in a transmitting and receiving control process occurring in the communications between transmitting and receiving terminals that make at least one transmitting and receiving control process in accordance with a predetermined communication protocol, comprises packet acquiring means for acquiring a packet to be transmitted or received in the communications between the transmitting and receiving terminals, calculation means for calculating the state information regarding a transmitting and receiving state of the packet to correspond to a result of transmitting and receiving control in accordance with the communication protocol based on the packet acquired by the packet acquiring means, and comparison means for comparing the state information calculated by the calculation means and the nonconformity information featuring nonconformity in the at least one transmitting and receiving control process, the nonconformity information being accumulated in advance, wherein the transmitting and receiving control process where the nonconformity occurs is detected based on a comparison result from the comparison means.

The automatic detecting apparatus may further comprise estimation means for specifying a transmitting and receiving control process to be made for the packet acquired at the transmitting and receiving terminal in accordance with the communication protocol based on the packet acquired by the packet acquiring means, and estimating the normal information corresponding to a processing result that the designated transmitting and receiving control process is normally performed, wherein the nonconformity information defines a relation between the state information calculated by the calculation means when there is the nonconformity and the normal information.

The automatic detecting apparatus may further comprise packet filter means for selecting only a required packet based on the header information of packet acquired by the packet acquiring means and transferring it to the calculation means.

The invention will be explained below in connection with the attached drawings.

FIG. 1 is a block diagram for explaining the configuration of an automatic detecting apparatus for protocol.
FIG. 2 is a diagram for explaining the overall configuration of a network employing the automatic detecting apparatus according to the embodiment of Fig. 1.
FIG. 3 is a table for explaining the packets acquired in the automatic detecting apparatus for protocol nonconformity.
FIG. 4 is a table for explaining the information calculated or estimated in the automatic detecting apparatus for protocol nonconformity based on the packets acquired in the automatic detecting apparatus for protocol nonconformity.
FIG. 5 is a flowchart for explaining an automatic detecting method for protocol nonconformity.
FIG. 6 is a functional block diagram of the conventional protocol analyzer.
FIG. 7 is a functional block diagram of the conventional analysis tool.

(Configuration of automatic detecting apparatus for protocol nonconformity)

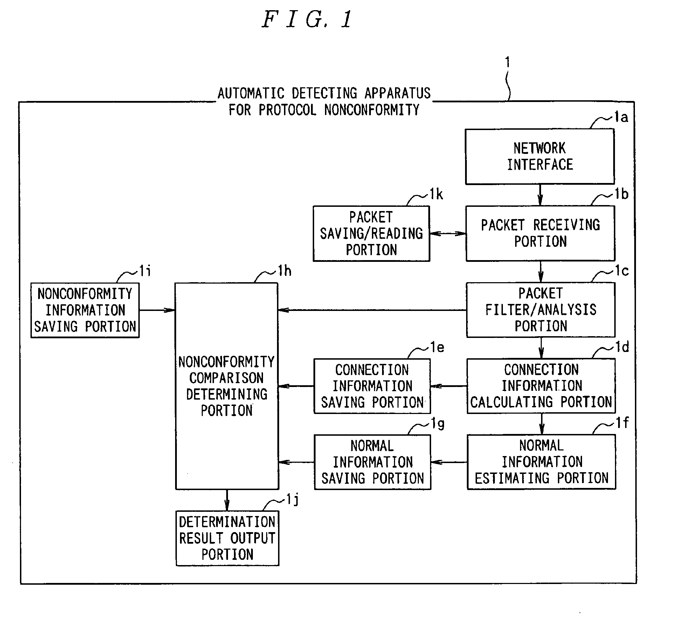

Aaccording to Fig. 1 a network interface 1a has a function of making communications with an external network. A packet receiving portion 1b has a function of receiving a packet arriving at the network interface 1a, in which if it is necessary to save the packet, the packet is transferred to a packet saving/reading portion 1k for data retention, or unless it is necessary to save the packet, the packet is transferred to a packet filter/analysis portion 1c.

The packet saving/reading portion 1k has a function of saving the packet received in the packet receiving portion 1b if it is necessary to save the packet, or transferring the saved packet data via the packet receiving portion 1b to the packet filter/analysis portion 1c if the saved packet data is subject to nonconformity analysis.

The packet filter/analysis portion 1c has a function of analyzing the header information of the packet received from the packet receiving portion 1b, and abolishing other packets than the required kinds of packets, and a function of transferring the header information and payload information of the required kind of packet to a nonconformity comparison determining portion 1h and a connection information calculating portion 1d.

The connection information calculating portion 1d has a function of receiving the head information and payload information of the packet via the packet filter/analysis portion 1c, and creating and saving the TCP connection information in a connection information saving portion 1e.

The TCP connection information is the state information regarding the transmitting and receiving state to correspond to the result of transmitting and receiving control in accordance with the TCP/IP protocol by acquiring the packet transmitted or received while the TCP connection is established in this embodiment. In this embodiment, the TCP connection information is acquired by analyzing the packet itself like the header information, payload information of packet and occurrence of a packet transmitting and receiving event, and updated every time receiving the header information and payload information of the packet corresponding to the connection. The TCP connection information includes various total values such as the number of transmitting packets, number of retransmitted packets, and number of SACK blocks, the minimum packet size, the throughput such as the maximum retransmit interval, and various evaluation values such as round trip time.

The connection information saving portion 1e has a function of saving the information created in the connection information calculating portion 1d.

A normal information estimating portion 1f has a function of receiving the header information and payload information of packet via the connection information calculating portion 1d, specifying the transmitting and receiving control process to be performed at the transmitting or receiving terminal that is a transmission source or transmission destination of the packet based on the header information of the packet, and estimating the normal information to correspond to the processing result when the designated transmitting and receiving control process is normally performed. The normal information may include, for example, the internal variables such as cwnd, ssthresh, srtt, and rttvar that are employed in the TCP performing the control at the transmitting and receiving terminal for performing the transmitting and receiving control in accordance with the TCP/IP protocol by establishing the TCP connection, and the state estimated values in the status transition diagram of the TCP. The estimated normal information is saved in the normal information saving portion 1g.

The normal information saving portion 1g has a function of saving the normal information estimated in the normal information estimating portion 1f.

A nonconformity comparison determining portion 1h makes a comparison between the analysis result of the packet filter/analysis portion 1c, the normal information saved in the normal information saving portion 1g, the nonconformity information saved in the nonconformity information saving portion 1i, and the TCP connection information saved in the connection information saving portion 1e to detect the process where nonconformity occurs. This result of comparison and determination is transferred to a determination result output portion 1j.

The nonconformity information saving portion 1i has a function of saving the information featuring the nonconformity in at least one process in the protocol as known before. Specific examples of data featuring the nonconformity include a conditional formula regarding the TCP connection information, a conditional formula regarding the packet header information, and a combination thereof. The conditional formula regarding the TCP connection information may be, for example, the formula defining the large and small relation between the value held in the TCP connection information and the estimated value of normal information, or the fixed value and the calculated value for the TCP connection information when it is abnormal, as will be described later. Also, the conditional formula regarding the packet header information may be involved in the nonconformity in the configuration of packet itself to define the configuration of incorrect packet.

The determination result output portion 1j has a function of outputting the determination result from the nonconformity comparison determining portion 1h.

(Examples of automatic detecting apparatus for protocol nonconformity and automatic detecting method for protocol nonconformity)

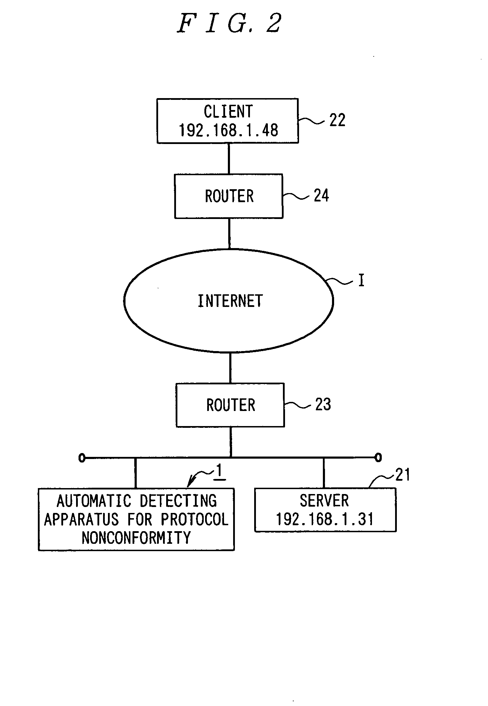

As one example for detecting the nonconformity with the automatic detecting apparatus for protocol nonconformity of FIG. 1, a method for detecting the nonconformity of not performing the Fast Retransmit/Fast Recovery algorithm (RFC2581 TCP Congestion Control) for congestion control that is one of the transmitting and receiving controls of packet with the TCP will be described below in connection with Fig. 2.

A server 21 communicates via a router 23, the Internet I and a router 24 with a client 22. The server 21 has the nonconformity of not performing the Fast Retransmit/Fast Recovery algorithm normally.

The automatic detecting apparatus for protocol nonconformity 1, which is connected to the same Ethernet (registered trademark) segment as the server 21, can receive all the packets transmitted or received by the server 21.

The connection information calculating portion 1d treats the statistical values snd_uma and snd_max. A statistical value snd_uma is the value of data segment acknowledged by the server 21, and a statistical value snd_max is the statistical value indicating the maximum sequence number for the data segment transmitted from the server 21. Therefore, the statistical value of (snd_max-snd_uma) takes a value corresponding to the result of the congestion control process in the server 21 during the normal time.

The normal information estimating portion 1f estimates cwnd and ssthresh in accordance with the Fast Retransmit/Fast Recovery algorithm and saves them at snd_cwnd and snd_ssthresh in the normal information saving portion 1g, every time receiving the packet transmitted to the server 21.

The normal information saving portion 1g treats snd_cwnd and snd_ssthresh as the normal information.

The nonconformity information saving portion 1i retains a conditional formula (1) featuring the nonconformity of not performing the Fast Retransmit/Fast Recovery algorithm.

$$(snd\_max-snd\_uma) > snd\_cwnd \tag{1}$$

The nonconformity comparison determining portion 1 h displays an indication that the nonconformity of not performing the Fast Retransmit/Fast Recovery algorithm exactly is observed, when the conditional formula (1) saved in the nonconformity information saving portion 1i is satisfied.

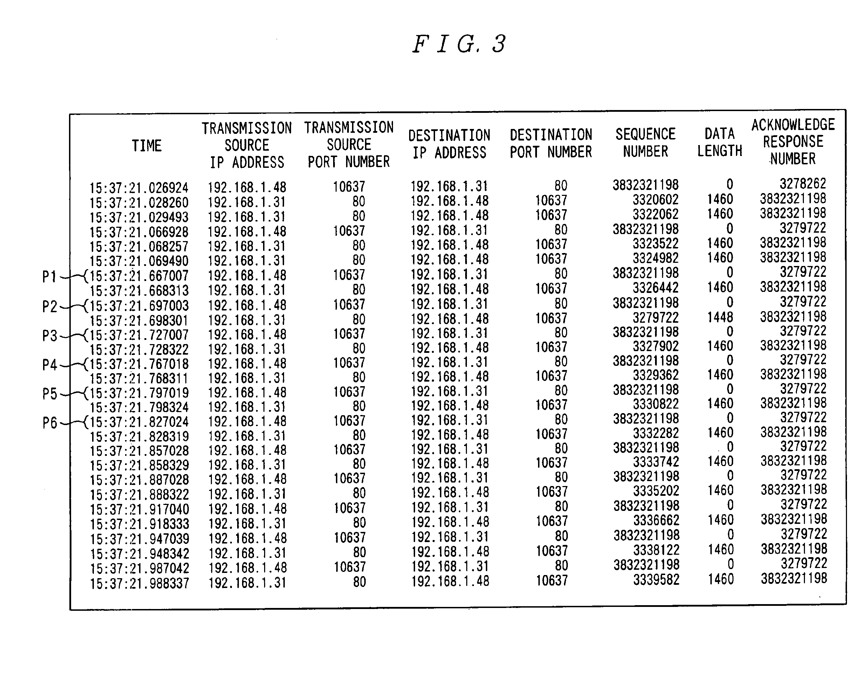

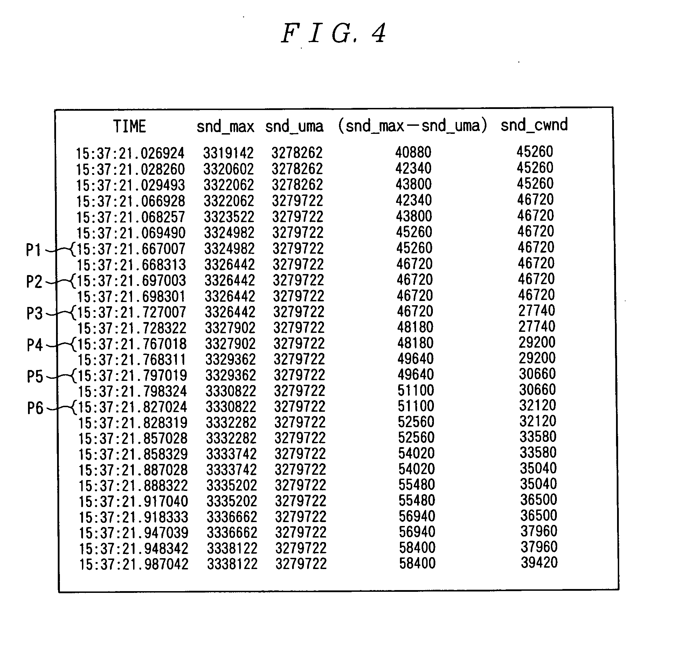

In the case where snd_cwnd is 43800 and snd_ssthresh is 65535 in the normal information saving portion 1g, if the packet as shown in FIG. 3 is received in a state where the estimated values are correct, snd_max, snd_uma, (snd_max-snd_uma) and snd_cwnd are changed as shown in FIG. 4.

In the TCP of the normal server 21 mounting the Fast Retransmit/Fast Recovery algorithm, the value of internal variable cwnd defining the congestion window size is increased, every time receiving a new ACK. If three duplicate ACKs are received (a packet loss due to congestion is confirmed), cwnd is made half the previous value, and three segments are added. For up to two duplicate ACKs, cwnd is not updated. Under such a control, the packet transfer amount at the time of congestion is controlled.

ACK reception P1 at time 15:37:21.667007 and ACK reception P2 at time 15:37:21.697003 are duplicate ACK reception, in which for these ACK reception, cwnd is not updated in the normal TCP, as shown in FIG. 4.

ACK reception P3 at time 15:37:21.727007 is the third duplicate ACK reception, and for this ACK reception P3, cwnd is made half the previous value, and three segments are added. For the subsequent duplicate ACKs, one segment is added every time receiving the duplicate ACK.

The estimated value snd_cwnd of cwnd in accordance with the normal algorithm is not changed upon ACK reception P1 and ACK reception P2, but updated to half the previous value + three segments (46720/2 + 1460 $\times$ 3 = 27740) upon ACK reception P3. Thereafter, the estimated value snd_cwnd is added one segment by one segment like 29200, 30660, 32120,.. for every duplicate ACK receptions P4, P5, P6, ...

On the contrary, (snd_max-snd_uma) is increased (value 45260, 46720) along with up to two duplicate ACK receptions P1 and P2, not decreased (value 46720) upon the third duplicate ACK reception P3, and increased along with the subsequent duplicate ACK receptions P4, P5, P6, .. (value 48180, 49640, 51100, ..).

Therefore, the conditional formula (1) holds from the ACK reception P3 at time 15:37:21.727007, so that the determination result output portion 1j displays an indication that the nonconformity of not performing the Fast Retransmit/Fast Recovery algorithm exactly is observed.

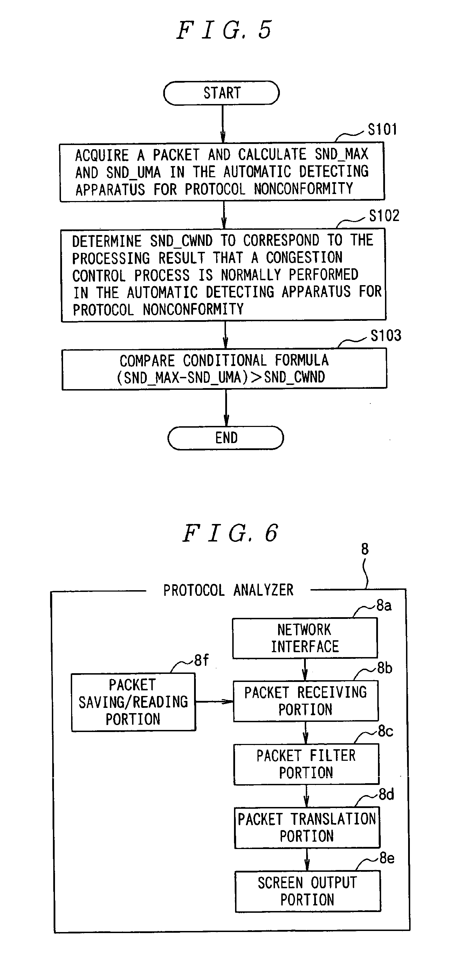

FIG. 5 shows a flowchart for the automatic detecting method for protocol nonconformity that is implemented in this example. Referring to FIGS. 2 and 5, the automatic detecting method for protocol nonconformity will be described below.

In FIG. 5, at step S101, the automatic detecting apparatus for protocol nonconformity 1 acquires a packet transmitted or received between the server 21 and the client 22, and calculates the state information regarding the transmitting and receiving state of packet to correspond to the result of transmitting and receiving control in accordance with the TCP, namely, snd_max and snd_uma in this example.

At step S102, the automatic detecting apparatus for protocol nonconformity 1 estimates snd_cwnd to correspond to the processing result that the congestion control process to be made based on the packet transmitted or received in the server 21 in accordance with the TCP is normally performed.

At step S103, the state information (snd_max, snd_uma) calculated at step S101 and the nonconformity information featuring the nonconformity of congestion control process are compared to detect the nonconformity. Herein, for the nonconformity information, the relation between the state information calculated at step S101 and the normal information estimated at step S102 is defined, whereby comparison is made to determine whether or not the conditional formula (1) is satisfied.

The processing from steps S101 to S103 are repeated in the communications between the server 21 and the client 22.

(Specific examples of detecting the protocol nonconformity)

In addition to the above example, the following example of detecting the protocol nonconformity is given.

For example, the following nonconformity is detected by calculating the acquisition time of packet transmitted or received at the connection. As an example, there is the nonconformity that an HTTP GET request packet is transmitted two seconds after establishment of the TCP connection in an HTTP (HyperText Transfer Protocol) connection process from the TCP of the client to the server. Normally, the HTTP GET request packet is transmitted immediately after establishment of the TCP connection.

In this case, the nonconformity is detected in the following way.

First of all, the connection information calculating portion for the automatic detecting apparatus for protocol nonconformity detects the establishment of connection with active open, and records its connection establishment time. That is, three packets, including a SYN packet from the client to the server, an ACK + SYN packet from the server to the client in response, and an ACK packet from the client to the server again, are detected. The information necessary to be acquired or updated every time acquiring the packet is registered beforehand in the connection information calculating portion.

Then, a first packet transmitted from the client to the server is detected, and the first data transmission time is recorded.

Then, the nonconformity comparison determining portion makes a comparison and determination based on the nonconformity information defining the conditional formula (2), thereby detecting the nonconformity in the HTTP connection process. This comparison and determination is made, for example, upon acquiring or updating the first data transmission time, or every time acquiring the packet.

$$\text{(First data transmission time - connection establishment time)} > 2 \text{ seconds} \qquad (2)$$

Also, the following nonconformity can be detected. For example, a retransmission process for the TCP is associated with the nonconformity that the initial value of retransmission due to time-out becomes 60 seconds. Usually, the round trip time is measured in the communication apparatus for performing the retransmission process, and the time-out value is successively measured based on the measured round trip time, so that the time-out interval is hardly set to 60 seconds.

In this case, the nonconformity in the retransmission process is detected in the following way, for example.

If the connection information calculating portion acquires the transmission data segment, the transmission time is recorded.

Then, if the connection information calculating portion acquires the transmission packet retransmitted due to time-out, the retransmission time is recorded.

Then, the nonconformity comparison determining portion determines the nonconformity if the retransmission interval calculated by subtracting the retransmission time from the transmission time based on the nonconformity information is 60 seconds.

Moreover, the following nonconformity is detected, for example, according to the nonconformity information regarding the configuration of packet transmitted or received at the connection. As an example, there is the nonconformity that the padding in an option field of the TCP header is longer than necessary (such as when the information to be set in the option field is not set). Usually, since the option data is set, the padding in the TCP option field is 3 bytes or less.

In this case, for example, the nonconformity is detected in the following way.

First of all, the connection information calculating portion or packet filter/analysis portion analyzes the option field of the TCP header and calculates the number of bytes occupied by the option data.

Then, the nonconformity comparison determining portion determines the nonconformity, and displays a warning, if the number of bytes in the unused area that is calculated by subtracting the number of bytes occupied by the option data from the total number of bytes in the option field is 4 bytes or more.

As described above in detail, it is possible to specify the processing where nonconformity occurs without performing the complex operation by comparing data featuring nonconformity in at least one processing to be made in accordance with a predetermined protocol and the actual communication state corresponding to the nonconformity data.

Further, since the estimated value of the normal processing that is predetermined in accordance with the protocol and the transmitting and receiving state of actual packet corresponding to the estimated value are compared, the nonconformity of protocol may be detected more correctly and generally. Also, since the actual packet is employed for input, it is possible to detect the nonconformity in which the control content is changed depending on the communication state.

**Claims**

1. An automatic detecting method for a protocol nonconformity in a transmitting and receiving control process occurring in the communications between transmitting and receiving terminals that make at least one transmitting and receiving control process in accordance with a predetermined communication protocol, said method comprising:

   a calculation step of calculating the state information regarding a transmitting and receiving state of a packet to correspond to a result of transmitting and receiving control in accordance with said communication protocol by acquiring the packet transmitted or received in the communications between said transmitting and receiving terminals; and
   a comparison step of comparing the state information calculated at said calculation step and the nonconformity information featuring nonconformity in said at least one transmitting and receiving control process;

   wherein the transmitting and receiving control process where said nonconformity occurs is detected based on a comparison result at said comparison step.

2. The method according to claim 1, further comprising an estimation step of specifying the transmitting and receiving control process to be made based on the packet transmitted or received at said transmitting and receiving terminal in accordance with said communication protocol, and estimating the normal information corresponding to a processing result that said specified transmitting and receiving control process is normally performed, wherein said nonconformity information defines a relation between the state information calculated at said calculation step when there is said nonconformity and said normal information.

3. The method according to claim 1 or 2, wherein said nonconformity information defines a relation between said state information and a fixed value confirmed in advance for the nonconformity in said transmitting and receiving control process.

4. The method according to any one of claims 1 to 3, wherein said calculation step further comprises updating said state information every time acquiring the packet, and said comparison step further comprises comparing the latest state information updated at said calculation step and said nonconformity information.

5. The method according to any one of claims 1 to 4, wherein said state information includes a total number of transmitting and receiving packets, the maximum value or minimum value of packet size, and the round trip time up to receiving a response packet to the transmitted packet.

6. An automatic detecting apparatus for a protocol nonconformity in a transmitting and receiving control process occurring in the communications between transmitting and receiving terminals that make at least one transmitting and receiving control process in accordance with a predetermined communication protocol, said apparatus comprising:

   packet acquiring means for acquiring a packet to be transmitted or received in the communications between said transmitting and receiving terminals;
   calculation means for calculating the state information regarding a transmitting and receiving state of said packet to correspond to a result of transmitting and receiving control in accordance with said communication protocol based on said packet acquired by said packet acquiring means; and
   comparison means for comparing the state information calculated by said calculation means and the nonconformity information featuring nonconformity in said at least one transmitting and receiving control process, said nonconformity information being accumulated in advance;

   wherein the transmitting and receiving control process where said nonconformity occurs is detected based on a comparison result from said comparison means.

**7.** The apparatus according to claim 6, further comprising estimation means for specifying a transmitting and receiving control process to be made for the packet acquired at said transmitting and receiving terminal in accordance with said communication protocol based on said packet acquired by said packet acquiring means, and estimating the normal information corresponding to a processing result that said designated transmitting and receiving control process is normally performed, wherein said nonconformity information defines a relation between the state information calculated by said calculation means when there is said nonconformity and said normal information.

**8.** The apparatus according to claim 6 or 7, further comprising packet filter means for selecting only a required packet based on the header information of packet acquired by said packet acquiring means and transferring it to said calculation means.

*F I G. 1*

1

AUTOMATIC DETECTING APPARATUS
FOR PROTOCOL NONCONFORMITY

```
                                                    ┌──────────────┐ ~1a
                                                    │   NETWORK    │
                                                    │  INTERFACE   │
                                                    └──────────────┘
                                  ~1k                       │
                        ┌──────────────┐          ┌──────────────┐ ~1b
                        │    PACKET    │          │   PACKET     │
                        │SAVING/READING│◄────────►│  RECEIVING   │
                        │   PORTION    │          │   PORTION    │
                        └──────────────┘          └──────────────┘
 ~1i              ~1h                                      │
┌────────────┐  ┌──────────────┐          ┌──────────────┐ ~1c
│NONCONFORMITY│  │              │          │    PACKET    │
│ INFORMATION │─►│NONCONFORMITY │◄─────────│FILTER/ANALYSIS│
│   SAVING    │  │  COMPARISON  │          │   PORTION    │
│  PORTION    │  │ DETERMINING  │          └──────────────┘
└────────────┘  │   PORTION    │   ~1e             │
                │              │  ┌──────────────┐ ┌──────────────┐ ~1d
                │              │  │  CONNECTION  │ │  CONNECTION  │
                │              │◄─│ INFORMATION  │◄│ INFORMATION  │
                │              │  │    SAVING    │ │ CALCULATING  │
                │              │  │   PORTION    │ │   PORTION    │
                │              │  └──────────────┘ └──────────────┘
                │              │   ~1g             ~1f
                │              │  ┌──────────────┐ ┌──────────────┐
                │              │  │    NORMAL    │ │    NORMAL    │
                │              │◄─│ INFORMATION  │◄│ INFORMATION  │
                │              │  │    SAVING    │ │  ESTIMATING  │
                │              │  │   PORTION    │ │   PORTION    │
                └──────────────┘  └──────────────┘ └──────────────┘
                        │  ~1j
                ┌──────────────┐
                │ DETERMINATION│
                │RESULT OUTPUT │
                │   PORTION    │
                └──────────────┘
```

*F I G. 2*

CLIENT
192.168.1.48 — 22

ROUTER — 24

INTERNET — I

ROUTER — 23

AUTOMATIC DETECTING
APPARATUS FOR PROTOCOL
NONCONFORMITY — 1

SERVER
192.168.1.31 — 21

# F I G. 3

| | TIME | TRANSMISSION SOURCE IP ADDRESS | TRANSMISSION SOURCE PORT NUMBER | DESTINATION IP ADDRESS | DESTINATION PORT NUMBER | SEQUENCE NUMBER | DATA LENGTH | ACKNOWLEDGE RESPONSE NUMBER |
|---|---|---|---|---|---|---|---|---|
| | 15:37:21.026924 | 192.168.1.48 | 10637 | 192.168.1.31 | 80 | 3832321198 | 0 | 3278262 |
| | 15:37:21.028260 | 192.168.1.31 | 80 | 192.168.1.48 | 10637 | 3320602 | 1460 | 3832321198 |
| | 15:37:21.029493 | 192.168.1.31 | 80 | 192.168.1.48 | 10637 | 3322062 | 1460 | 3832321198 |
| | 15:37:21.066928 | 192.168.1.48 | 10637 | 192.168.1.31 | 80 | 3832321198 | 0 | 3279722 |
| | 15:37:21.068257 | 192.168.1.31 | 80 | 192.168.1.48 | 10637 | 3323522 | 1460 | 3832321198 |
| | 15:37:21.069490 | 192.168.1.31 | 80 | 192.168.1.48 | 10637 | 3324982 | 1460 | 3832321198 |
| P1 | 15:37:21.667007 | 192.168.1.48 | 10637 | 192.168.1.31 | 80 | 3832321198 | 0 | 3279722 |
| | 15:37:21.668313 | 192.168.1.31 | 80 | 192.168.1.48 | 10637 | 3326442 | 1460 | 3832321198 |
| P2 | 15:37:21.697003 | 192.168.1.48 | 10637 | 192.168.1.31 | 80 | 3832321198 | 0 | 3279722 |
| | 15:37:21.698301 | 192.168.1.31 | 80 | 192.168.1.48 | 10637 | 3279722 | 1448 | 3832321198 |
| P3 | 15:37:21.727007 | 192.168.1.48 | 10637 | 192.168.1.31 | 80 | 3832321198 | 0 | 3279722 |
| | 15:37:21.728322 | 192.168.1.31 | 80 | 192.168.1.48 | 10637 | 3327902 | 1460 | 3832321198 |
| P4 | 15:37:21.767018 | 192.168.1.48 | 10637 | 192.168.1.31 | 80 | 3832321198 | 0 | 3279722 |
| | 15:37:21.768311 | 192.168.1.31 | 80 | 192.168.1.48 | 10637 | 3329362 | 1460 | 3832321198 |
| P5 | 15:37:21.797019 | 192.168.1.48 | 10637 | 192.168.1.31 | 80 | 3832321198 | 0 | 3279722 |
| | 15:37:21.798324 | 192.168.1.31 | 80 | 192.168.1.48 | 10637 | 3330822 | 1460 | 3832321198 |
| P6 | 15:37:21.827024 | 192.168.1.48 | 10637 | 192.168.1.31 | 80 | 3832321198 | 0 | 3279722 |
| | 15:37:21.828319 | 192.168.1.31 | 80 | 192.168.1.48 | 10637 | 3332282 | 1460 | 3832321198 |
| | 15:37:21.857028 | 192.168.1.48 | 10637 | 192.168.1.31 | 80 | 3832321198 | 0 | 3279722 |
| | 15:37:21.858329 | 192.168.1.31 | 80 | 192.168.1.48 | 10637 | 3333742 | 1460 | 3832321198 |
| | 15:37:21.887028 | 192.168.1.48 | 10637 | 192.168.1.31 | 80 | 3832321198 | 0 | 3279722 |
| | 15:37:21.888322 | 192.168.1.31 | 80 | 192.168.1.48 | 10637 | 3335202 | 1460 | 3832321198 |
| | 15:37:21.917040 | 192.168.1.48 | 10637 | 192.168.1.31 | 80 | 3832321198 | 0 | 3279722 |
| | 15:37:21.918333 | 192.168.1.31 | 80 | 192.168.1.48 | 10637 | 3336662 | 1460 | 3832321198 |
| | 15:37:21.947039 | 192.168.1.48 | 10637 | 192.168.1.31 | 80 | 3832321198 | 0 | 3279722 |
| | 15:37:21.948342 | 192.168.1.31 | 80 | 192.168.1.48 | 10637 | 3338122 | 1460 | 3832321198 |
| | 15:37:21.987042 | 192.168.1.48 | 10637 | 192.168.1.31 | 80 | 3832321198 | 0 | 3279722 |
| | 15:37:21.988337 | 192.168.1.31 | 80 | 192.168.1.48 | 10637 | 3339582 | 1460 | 3832321198 |

EP 1 432 205 A2

# F I G. 4

| TIME | snd_max | snd_uma | (snd_max−snd_uma) | snd_cwnd |
|---|---|---|---|---|
| 15:37:21.026924 | 3319142 | 3278262 | 40880 | 45260 |
| 15:37:21.028260 | 3320602 | 3278262 | 42340 | 45260 |
| 15:37:21.029493 | 3322062 | 3278262 | 43800 | 45260 |
| 15:37:21.066928 | 3322062 | 3279722 | 42340 | 46720 |
| 15:37:21.068257 | 3323522 | 3279722 | 43800 | 46720 |
| 15:37:21.069490 | 3324982 | 3279722 | 45260 | 46720 |
| P1 15:37:21.667007 | 3324982 | 3279722 | 45260 | 46720 |
| 15:37:21.668313 | 3326442 | 3279722 | 46720 | 46720 |
| P2 15:37:21.697003 | 3326442 | 3279722 | 46720 | 46720 |
| 15:37:21.698301 | 3326442 | 3279722 | 46720 | 46720 |
| P3 15:37:21.727007 | 3326442 | 3279722 | 46720 | 27740 |
| 15:37:21.728322 | 3327902 | 3279722 | 48180 | 27740 |
| P4 15:37:21.767018 | 3327902 | 3279722 | 48180 | 29200 |
| 15:37:21.768311 | 3329362 | 3279722 | 49640 | 29200 |
| P5 15:37:21.797019 | 3329362 | 3279722 | 49640 | 30660 |
| 15:37:21.798324 | 3330822 | 3279722 | 51100 | 30660 |
| P6 15:37:21.827024 | 3330822 | 3279722 | 51100 | 32120 |
| 15:37:21.828319 | 3332282 | 3279722 | 52560 | 32120 |
| 15:37:21.857028 | 3332282 | 3279722 | 52560 | 33580 |
| 15:37:21.858329 | 3333742 | 3279722 | 54020 | 33580 |
| 15:37:21.887028 | 3333742 | 3279722 | 54020 | 35040 |
| 15:37:21.888322 | 3335202 | 3279722 | 55480 | 35040 |
| 15:37:21.917040 | 3335202 | 3279722 | 55480 | 36500 |
| 15:37:21.918333 | 3336662 | 3279722 | 56940 | 36500 |
| 15:37:21.947039 | 3336662 | 3279722 | 56940 | 37960 |
| 15:37:21.948342 | 3338122 | 3279722 | 58400 | 37960 |
| 15:37:21.987042 | 3338122 | 3279722 | 58400 | 39420 |

## F I G. 5

```
                    ┌─────────────┐
                    │    START    │
                    └──────┬──────┘
                           │                        S101
        ┌──────────────────▼──────────────────┐
        │ ACQUIRE A PACKET AND CALCULATE SND_MAX│
        │ AND SND_UMA IN THE AUTOMATIC DETECTING│
        │ APPARATUS FOR PROTOCOL NONCONFORMITY  │
        └──────────────────┬──────────────────┘
                           │                        S102
        ┌──────────────────▼──────────────────┐
        │ DETERMINE SND_CWND TO CORRESPOND TO THE│
        │ PROCESSING RESULT THAT A CONGESTION    │
        │ CONTROL PROCESS IS NORMALLY PERFORMED  │
        │ IN THE AUTOMATIC DETECTING APPARATUS FOR│
        │ PROTOCOL NONCONFORMITY                 │
        └──────────────────┬──────────────────┘
                           │                        S103
        ┌──────────────────▼──────────────────┐
        │      COMPARE CONDITIONAL FORMULA      │
        │  (SND_MAX-SND_UMA)>SND_CWND           │
        └──────────────────┬──────────────────┘
                           │
                    ┌──────▼──────┐
                    │     END     │
                    └─────────────┘
```

## F I G. 6

PROTOCOL ANALYZER — 8

- NETWORK INTERFACE — 8a
- PACKET SAVING/READING PORTION — 8f
- PACKET RECEIVING PORTION — 8b
- PACKET FILTER PORTION — 8c
- PACKET TRANSLATION PORTION — 8d
- SCREEN OUTPUT PORTION — 8e

# F I G. 7

9

ANALYSIS TOOL

9a
PACKET READING
PORTION

9b
PACKET RECEIVING
PORTION

9c
PACKET FILTER
PORTION

9d
PACKET ANALYSIS
PORTION

9f
STATISTICAL
INFORMATION
SAVING PORTION

9e
CONNECTION STATISTICAL
INFORMATION CALCULATING
PORTION

9g
SCREEN OUTPUT
PORTION